(19) Europäisches Patentamt / European Patent Office / Office européen des brevets

(11) **EP 4 305 822 B1**

(12) **EUROPEAN PATENT SPECIFICATION**

(45) Date of publication and mention of the grant of the patent:
**06.05.2026 Bulletin 2026/19**

(21) Application number: **21713135.8**

(22) Date of filing: **12.03.2021**

(51) International Patent Classification (IPC):
$H04L\ 41/147^{(2022.01)}$    $H04L\ 41/142^{(2022.01)}$
$H04L\ 41/5009^{(2022.01)}$

(52) Cooperative Patent Classification (CPC):
**H04L 41/5016; H04L 41/142; H04L 41/147**

(86) International application number:
**PCT/IB2021/052095**

(87) International publication number:
**WO 2022/189834 (15.09.2022 Gazette 2022/37)**

(54) **METHODS AND APPARATUSES FOR REPORTING ANOMALIES AND FORECASTING KEY PERFORMANCE INDICATOR (KPI) MEASUREMENTS IN A TELECOMMUNICATIONS NODE**

VERFAHREN UND VORRICHTUNGEN ZUR MELDUNG VON ANOMALIEN UND VORHERSAGE VON MESSUNGEN DES SCHLÜSSELLEISTUNGSINDIKATORS (KPI) IN EINEM TELEKOMMUNIKATIONSKNOTEN

PROCÉDÉS ET APPAREILS POUR RAPPORTER DES ANOMALIES ET PRÉVOIR DES MESURES D'INDICATEUR CLÉ DE PERFORMANCE (KPI) DANS UN NOEUD DE TÉLÉCOMMUNICATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.01.2024 Bulletin 2024/03**

(73) Proprietor: **Telefonaktiebolaget LM Ericsson (publ)**
**164 83 Stockholm (SE)**

(72) Inventors:
• **BASHBAGHI, Saman**
  **J5R 6W3 Candiac QC (CA)**
• **SELLIER, Jean Michel**
  **H3W 0B1 Montreal QC (CA)**
• **GOLEA, Mostefa**
  **K1T 0G2 Ottawa ON (CA)**
• **MARATH, Sathi**
  **K2K 3L3 Kanata ON (CA)**

(74) Representative: **Ericsson Patent Development**
**Torshamnsgatan 21-23**
**164 80 Stockholm (SE)**

(56) References cited:
**EP-A1- 3 401 789    US-A1- 2021 051 503**
**US-B2- 9 130 825**

**Description**

TECHNICAL FIELD

The present disclosure relates to surveillance of key performance indicators in telecommunications nodes.

BACKGROUND

We are now living in the big data and real-time processing era. In telecommunications networks management domains, large number of metrics, key performance indicators (KPIs), are continuously monitored, on almost every network device. The resulting data streams are then pipelined and analyzed, in near real-time, for anomalies, trends, correlations, etc. Network operators combine those real-time analytics to react and correct issues, to keep the networks running smoothly. Machine Learning (ML) and Artificial Intelligence (AI) are becoming key components of network management solutions.

In the time series analysis community, there has been a long-standing consensus that sophisticated methods do not necessarily produce better forecast and/or anomaly detection (AD), when compared to simpler methods. This was one of the conclusions of the influential M3 forecasting competition held in 1999. Simpler and noise-insensitive models, with reasonable assumptions about the data, will typically perform very well, e.g. Exponential Smoothing techniques and the well-known AutoRegressive Integrated Moving Average (ARIMA) method.

Anomaly-detection in time-series is a well-established field of research. A large number of models and techniques are documented in the literature. Anomaly-detection has applications in many domains, including telecommunications networks management, fraud detection, health, etc.

Document US 2021 / 0 051 503 A1 may be construed to disclose an anomaly detection and analysis system that generates analysis or summary of the anomalies detected from key performance indicators (KPIs). The system receives anomaly data reporting anomalies detected in key performance indicator (KPI) data. The system classifies the reported anomalies into a plurality of anomaly items, wherein anomalies from KPI data that share a set of features are assigned to one anomaly item. The system computes a ranking score for each anomaly item by assigning predefined weights for different anomaly types that are present in the anomaly item. The system sorts a list of anomaly items from the plurality of anomaly items into a sorted list of anomaly items according to the ranking scores computed for the plurality of anomaly items. The system sends the sorted list of anomaly items to a user device for presentation.

SUMMARY

Existing models do not fully address the complexities of deploying and maintaining a productized anomaly-detection solution, including complexities such as memory footprint, processing speed, and handling of data-drift.

According to the present disclosure, there are provided methods, apparatuses and a computer-readable medium according to the independent claims. Further developments are set forth in the dependent claims.

The method, apparatus and non-transitory computer readable medium provided herein present improvements to the way reporting anomalies and forecasting of expected measurements for a key performance indicator (KPI) operate.

BRIEF DESCRIPTION OF THE DRAWINGS

Figure 1 is a graph illustrating results obtained with different methods.
Figure 2 is a schematic illustration of an anomaly detection process.
Figure 3 is a graph illustrating anomaly detection results of an offline polynomial approach without re-training.
Figures 4 and 5 are graphs illustrating anomaly detection results of an offline polynomial approach with retraining on a scheduled weekly basis (parts 1 and 2).
Figure 6 is a graph illustrating anomaly detection results according to the methods described herein.
Figure 7 is a flowchart of a method for reporting an anomaly in a telecommunications node.
Figure 8 is a flowchart of a method for forecasting a plurality of expected measurements for a key performance indicator (KPI) in a telecommunications node.
Figure 9 is a schematic illustration of a virtualization environment in which the different methods, apparatuses and non-transitory computer readable media described herein can be deployed.

DETAILED DESCRIPTION

Various features will now be described with reference to the drawings to fully convey the scope of the disclosure to those skilled in the art.

Sequences of actions or functions may be used within this disclosure. It should be recognized that some functions or actions, in some contexts, could be performed by specialized circuits, by program instructions being executed by one or more processors, or by a combination of both.

Further, computer readable carrier or carrier wave may contain an appropriate set of computer instructions that would cause a processor to carry out the techniques described herein.

The functions/actions described herein may occur out of the order noted in the sequence of actions or simultaneously. Furthermore, in some illustrations, some blocks, functions or actions may be optional and may or may not be executed; these are generally illustrated with dashed lines.

It should be noted that examples provided herein based on Python code and that some formulas, derived from the examples, may use Python like notations.

In telecommunication network management, anomaly-detection is the process of continuous monitoring of KPIs of the network for detecting unusual/abnormal events. An abnormal event acts as an alert that the network under observation is not functioning properly. Network operators use an anomaly dashboard to keep a close watch on the health of their network, investigate and resolve issues flagged by anomaly alerts.

Anomalies are also usually stored in a database, for offline analysis. For example, a network operator can retrieve last week's anomalies and analyze them for recurring issues that need attention.

For example, anomaly detection can be used for monitoring frame-delay on a communication link. A sudden increase in frame-delay, from a few milliseconds to 100s of milliseconds may be an indication that the link is experiencing issues (hardware malfunction, over-utilization, etc.), thus impacting the user-traffic traversing that link. In this example, upon receiving a frame-delay anomaly alert, the network operator can check hardware sanity and/or traffic volume on the link. The operator can then take appropriate corrective actions.

Examples of telecom network KPIs include frame-delay, errored frames, packet loss, total packets in, total packets out, link latency, interface availability, memory utilization, disk utilization, central processing unit (CPU) utilization, number of http calls, etc.

Anomaly-detection can be used in multiple contexts. Anomaly detection is applicable to intrusion detection, fraud detection, fault detection, system health monitoring, event detection in sensor networks, etc.

As stated previously, existing models do not fully address the complexities of deploying and maintaining a productized anomaly-detection solution, including complexities such as memory footprint, processing speed, and handling of data-drift. Data-drift refers to changes in the nature or structure of the data over time. Data-drift is common in telecommunications networks management space, due, for example, to changes in the nature of the traffic and/or changes in the characteristics of network devices. A model that does not automatically handle data-drift requires periodic offline retraining and re-deployment, hence inducing complex model lifecycle-management (LCM) procedures.

Offline periodic retraining and re-deployment are challenging and make model LCM very complex. The procedure requires:

- continuous monitoring of the performance of the deployed model, via some metrics published by the model itself;
- gathering of historical data for next re-training cycle, resulting in additional data storage and/or data transfer;
- scheduling and executing regular lengthy retraining/redeployment activities, including data-science, testing and validation in customer lab, and reserving maintenance windows on customer's servers for model-upgrade.

To monitor a KPI, there is a need to detect any time when there is a change in the normal behaviour of the KPI. Reasons there would be a change may include: network related reasons, a capturing device failed to record the measurement, or any other reason as explained previously. A time series is the value of metrics, or KPIs, captured sequentially over time. In all the drawings, the time series are univariant, with the X axis being the time and the value of each KPI or each metric individually as the Y axis.

One goal of monitoring KPIs is to provide alarms or messages indicating that a change in the normal behaviour of a KPI is detected.

In order to be able to evaluate the performance of the methods described herein, some baseline methods for anomaly detection are used, including the statistical analysis of a KPI over time, with e.g. a moving window, or a sequence of data. In this base line method, the mean and standard deviation of the KPI is calculated either for an entire window e.g. of one day, or for sub-windows, which can then be used as a comparison basis for future data. When a significant change is encountered, e.g. the difference with the mean expected value is above a threshold, or if the measurement is outside a number of standard deviations from the mean expected value (or according to another criteria), an anomaly can be reported. Such a solution is highly dependent on the number and/or size of the window(s).

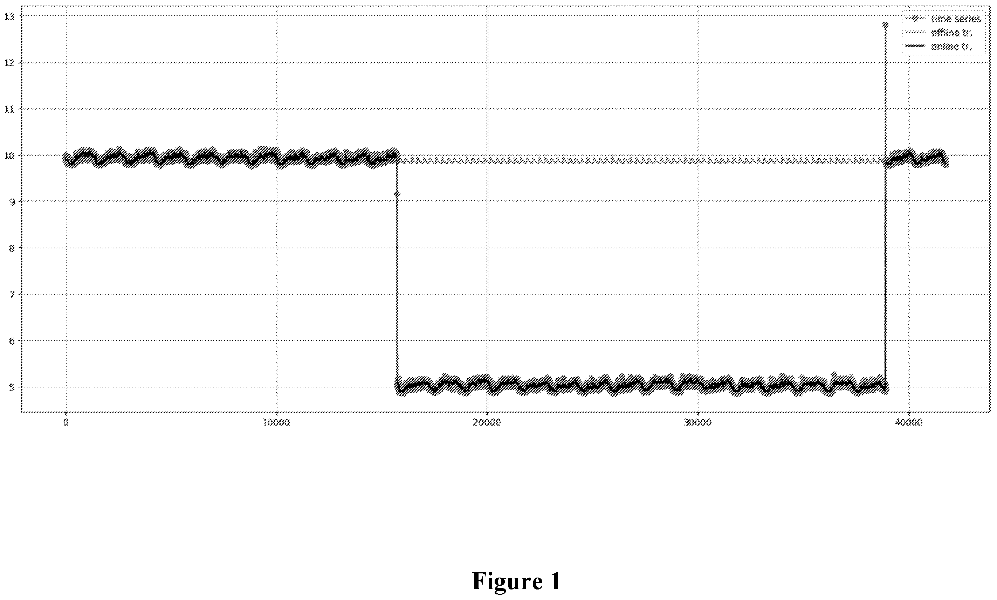

Another method that is used to establish the base line, consists in fitting a function that can replicate or model the behaviour of the KPI as the normal behaviour throughout the time series. In this case, some of the data is used for training, e.g. data gathered during a period of 10 days. The behaviour of the time series is modeled over this 10-day period and a function is fitted in the data. A polynomial function can be used to do so. This offline machine learning technique is used to learn the coefficients of the polynomial function over the 10-day period. In the present case, a level 7 polynomial function is used, because variations in the data are not high, but other levels could be used depending on the normal variations in the time series. In the examples provided herein and illustrated, the variations (sinusoid in shape) are not very high and a level 7 polynomial function works well (see Figures 1 and 3-6). The weights or coefficient of the polynomial function are then used to model the data for the next days.

Once the training is done, the model is ready to detect anomalies in the system. One model is used for each KPI that is being monitored.

The models described above are used as the baseline for later comparison with the methods provided herein. Offline training is illustrated in Figure 1, as the curve that is around level 10 on the Y axis and remains at this level for the entire training samples (from 0 to more than 40000 on the X axis). Figure 1 clearly illustrates when an anomaly happens (the drop from level 10 to 5 on the Y axis).

The baseline model described previously cannot adapt to such a change. When looking at Figure 1, one sees that the normal behaviour resumes (at a different level) after the drop, until there is a rise again at a later time. Solutions to this type of change, with the baseline methods, would be retraining and updating the model, otherwise many false positives would be generated.

Building on the baseline methods, an improved training method is proposed that enables the model to adapt when changes happen in the time series. The training method is an online training method in which a small number of samples are used for initial training of the weights of the model (herein, weights are alternatively called coefficients or parameters), and with continuous training as new data is received. Thereby the model can adapt itself to the most recent changes in the time series.

The method described herein is a method that is much simpler than previously existing techniques that were developed in the last decade to deal with anomaly detection.

The model is then used to generate a prediction, to compare the prediction with actual data and to detect any discrepancies. The model used is similar to the baseline model, i.e. it is a 7$^{th}$ order polynomial function (but it could be of a different order as well).

The method therefore consists of an on-line learning solution, with application to anomaly-detection. The online solution can automatically handle data-drift in that are frequent in telecommunications networks time-series. The solution integrates nicely with analytics data pipelines. The solution was tested on a large real-world customer data set, with very good results. The solution eliminates the need for anomaly detection (AD) model retraining and re-deployment, hence greatly simplifying model life-cycle management (LCM).

The methods provided herein allow designing a generic, adaptive and light-weight AD solution that can be easily integrated into a network management product. To that end, the online learning algorithm continuously updates the coefficients or parameters of the AD model to offset time-series drift and simplify the LCM of the model. This online learning algorithm can be integrated into a network management real-time analytics pipeline to accurately detect and report anomalies

The general problem statement of unsupervised AD consists in the following problem: provided a time series ($T_i$), which can be seen as a series of points $(x_i, y_i)$, $i$=1, ..., N, where $x$ is the time and $y$ is the actual measurement, detect in an automatic fashion (i.e. without the help of humans in any form, e.g. without a priori knowledge) the various anomalies present in that time series. Moreover, in this specific context, an extra layer of complexity is represented by the fact that the time series is presented one point at a time while the previous observations have been forgotten.

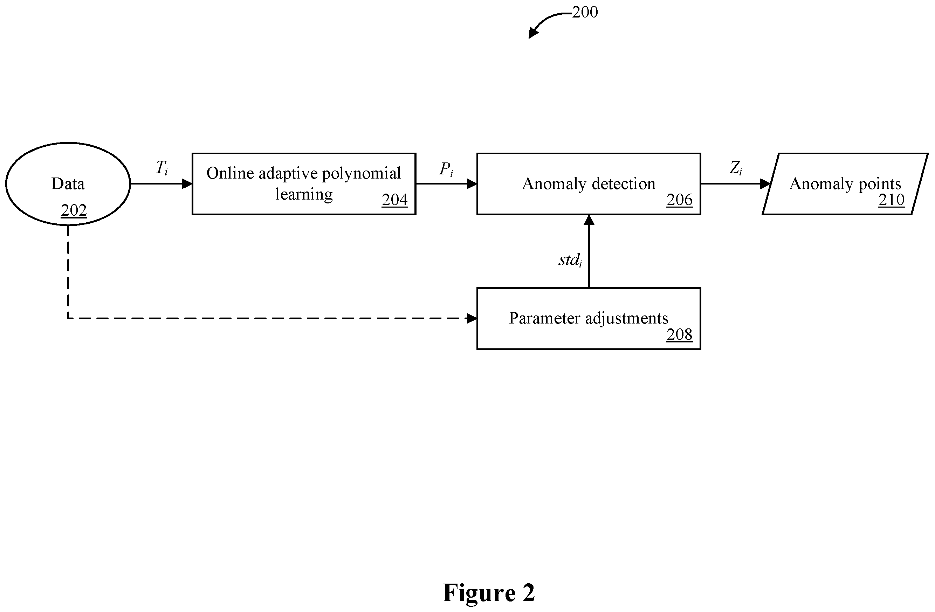

The overview of the proposed solution 200 is shown in Figure 2. In Figure 2, the data 202, in the form of a time series $T_i$ is the input of the online adaptive polynomial learning 204. As new data is obtained, parameter adjustments are calculated and used for anomaly detection 206, using the result of the online adaptive polynomial learning 204. Anomaly points 210 can then be reported.

As shown in Figure 2, an adaptive solution based on online polynomial learning is designed for AD purpose, where polynomial curve $P_i$ is fitted to emulate the normal behavior (trend and seasonality) of the time series $T_i$. Then, a confidence band is calculated inspired by z-score concept $Z_i$ computed using $std_i$, and every data point outside that confidence band is considered as an anomaly point.

The polynomial curve generated with this method can adapt itself to the latest changes or fluctuations in the time series in an online/incremental fashion. The model automatically adjusts its hyper-parameters upon receiving a new data point. Therefore, it does not require storage of state information or historical data. This approach can directly tackle the problem of AD without having to explore a full search-space of the polynomial hyper-parameters or coefficients: only the learning rate is pre-selected, to reflect the importance of new vs. historical observations. This approach also has a high-level accuracy, processing speed, and memory footprint that are comparable to the best standard methods.

Advantages include that the proposed online learning algorithm is a very light-weight solution and well-suited for real-time, large scale time-series AD in production environments. It is a fully automated approach (does not necessitate a human expert), it can adapt itself to upcoming observations, it reduces the number of false positives that are usually associated with data-drift, if stared with random polynomial coefficients, it converges to the best polynomial coefficients within few observations, it can also start from pre-trained polynomial coefficients, using available offline training data. Further, it does not consume extra memory to maintain the states or data history (previous observations), it is computationally efficient (fast processing of the data), and by eliminating the need for periodic retraining and re-deployment, it simplifies the model LCM.

The goal can be described as: given a time series $T_i$ of data points $(x_i, y_i)$, with i=1, ..., N, adapt the coefficients a= $(a_0, a_1, ..., a_7)$ of a 7-th order polynomial function $P(x)$, which is the model, to follow the series every time a new observation is provided. The polynomial function is defined as:

$$P(x) := a_7 x_7 + a_6 x_6 + ... + a_2 x_2 + a_1 x + a_0 \qquad (1)$$

A 7th order polynomial function is used, which includes 7 + 1 coefficients $a$, which, in the context of the experiments that have been done, gives meaningful predictions. Polynomial functions of different orders could be used in other contexts.

A loss function, L to norm, that gives a difference between the observation and the prediction, is defined as:

$$L(\underline{a}, x_i, y_i) := |P(a, x_i) - y_i|^2, \text{ for any given observation } (x_i, yi) \qquad (2)$$

Note that analytical computation of the gradient can be made with:

$$\nabla_{aj} L(x_i) = 2\, (x_i)^j\, |P(x_i) - y_i|, \text{ for } j=0,..., 7 \quad (3)$$

In the next step, the values for the coefficients a are computed. All the observations that are made depend on time, i.e. those are time-dependent measurements. In this context, time can be seen as a variable and there is another variable that gives a measurement each time an observation is made.

At the beginning, few data points (observations) are available and these few datapoints are used to compute initial values for the coefficients. These coefficients should be better than, for example, using a stochastic approach, as they should have some meaning.

To find initial values for the coefficients a, M initial points (with $M<N$, e.g. a whole day of observations) are selected and a least square method is applied to find the coefficients of the polynomial function (the complexity being $O(M \cdot 7^2) = O(49 \cdot M)$), using:

$$a = np.polyfit(X[0:M], y[0:M], degree), \text{ where degree} = 7 \qquad (4)$$

Polyfit is a polynomial fitting function which is fitted over the first few points that are initially available.

In the next step, the coefficients a that were initially computed are used. From this point on, the method uses only one new measurement at a time to update the polynomial function and these measurements are not stored, they are discarded. This allows the method to run in memory limited devices. One challenge is to use only one data at a time while ensuring that the polynomial function continues to provide good predictions and even improves the prediction over time. To do so, the polynomial function should adapt in time, e.g. it should be able to adapt to jumps in value that can occur occasionally (as illustrated and previously described in relation with Figure 1).

Using an incremental learning method for the polynomial function enables to adapt the coefficients as soon as changes are observed in the measurements.

To do so, as illustrated by the code below, a gradient is added to the coefficients. The computation of the gradient can be exact because the polynomial function allows it and is very efficient.

The below code/formula enables the evolution of the coefficients a. Every time a new observation $(x_i, y_i)$ is presented, the coefficients a are evolved by applying a single iteration of gradient descent:

*for j in range (0, degree + 1):*

$$a[j] = a[j] - lr * grad[j][i] \text{ \# j-th component of the gradient evaluated in } x_i \qquad (5)$$

It should be noted that the Python function "range" works like this: range(0, N) is the range of integer numbers going from 0 to N-1. Thus, the interval "range(0, degree+1)" goes from 0 to 7 (i.e. 8 coefficients for a 7-th order polynomial).

The gradient is computed using formula 3.

The coefficient "$l_r$" is the learning rate of the method. This parameter ranges from 0 to 1 and defines the relevance of past observations (bigger learning rates mean recent observations are very influent on the calculation of the polynomial coefficients). In the many experimental time-series, it has been found that a generic learning rate of 0.1 yields good results, but other values can alternatively be used.

It was observed that this method performs better than other methods in the art (e.g. ARIMA, which comprises a class of models that 'explains' a given time series based on its own past values).

As stated previously, in the many experimental time-series, it has been found that polynomial degree = 7 yields good results. However, the method allows for other polynomial degrees, if required or desired.

The above described process can be combined with an adaptive z-score approach. In that case, it has been empirically observed that it is better to compute the average and standard deviation of the given time series, again, in an incremental fashion. The code for this part of the approach reads:

```
y = time_series
dim = len(y)
std = np.zeros((dim, 1))
alpha = 1.0e-4 # learning rate for std
std[0] = 1.0e-7 # initial conditions - a very small number
avg = y[0]
for n in range(1, dim):
    avg = avg + (y[n] - avg) / (dim - n)
    std[n] = std[n-1] + alpha*(np.power((y[n]-avg), 2.0) - std[n-1])
for n in range(0, dim):
    std[n] = math.sqrt(std[n])                              (6)
```

In the above code, *dim* is the number of observations provided, *len* is a Python function used to compute the length of a given array, *zeros* is a known Python function which returns an array filled with zeros, *alpha* is a coefficient ranging from 0 to 1.0 and *power is* a Python function to compute power of a number.

Referring again to Figure 2:

$$Z_i = (T_i - avg_i) / std_i$$
$$\text{If } Z_i > 3* std_i \text{ or } Z_i < -3*std_i$$
$$\text{Then report anomaly} \qquad\qquad (7)$$

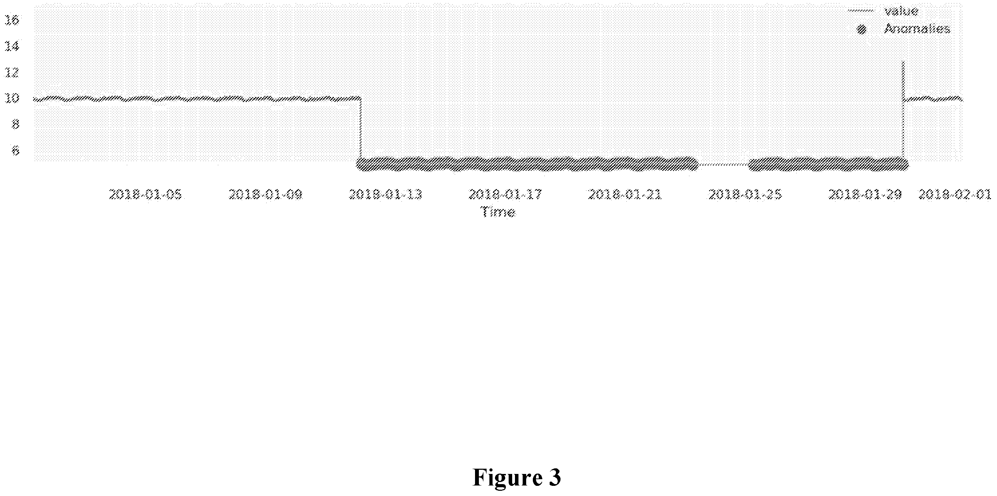

In the figures 3-6, two different offline approaches (with/without retraining) are presented. The new online approach to detect anomalies (dots) is also presented using the same anonymized customer time series. The offline rolling polynomial approach (Figure 3) generates continuous false positive anomalous points after a data drift happens (starting around 2018-01-13), because it was trained on the first week of data and was not able to adapt itself to the data-drift.

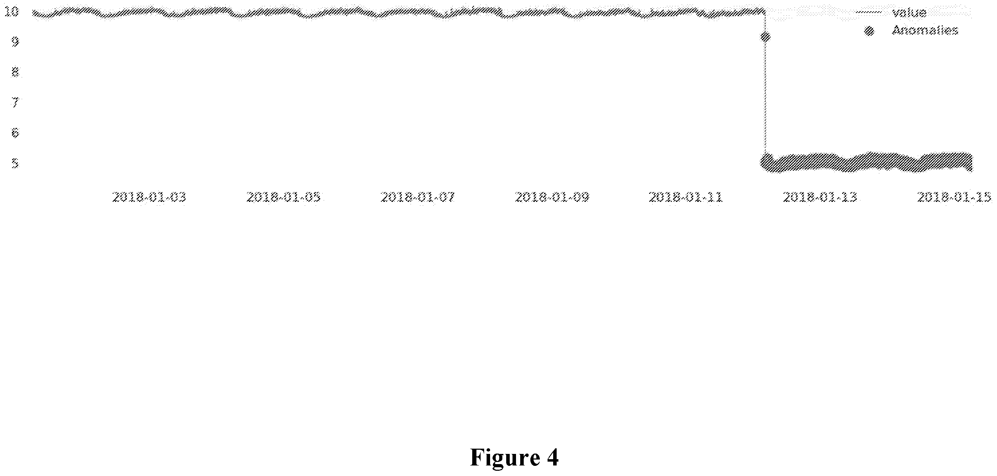

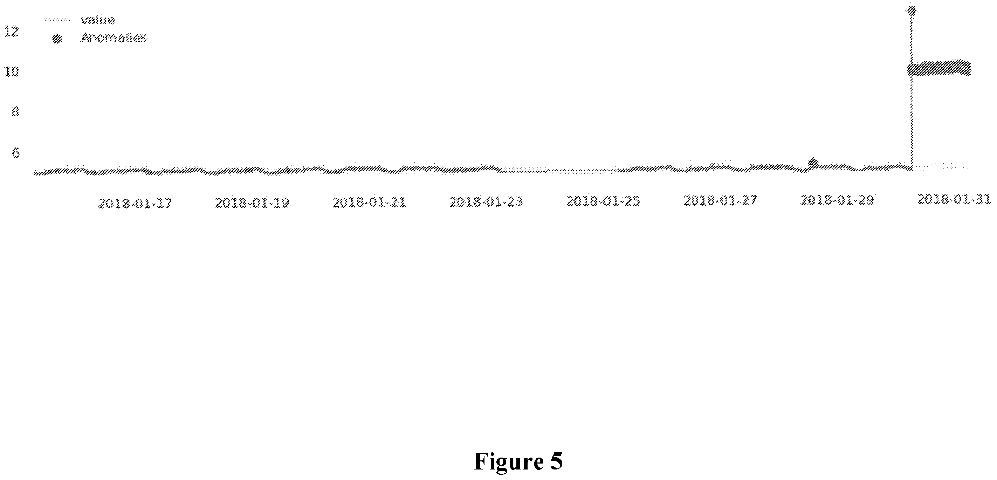

Offline retraining polynomial on a scheduled weekly basis (Figure 4 and Figure 5 which is the continuation of Figure 4) slightly improves the performance, but it requires additional data gathering, retraining and re-deployment strategy which is very costly. With this method many false-positives can be observed upon a data-drift. The false positives disappear upon retraining.

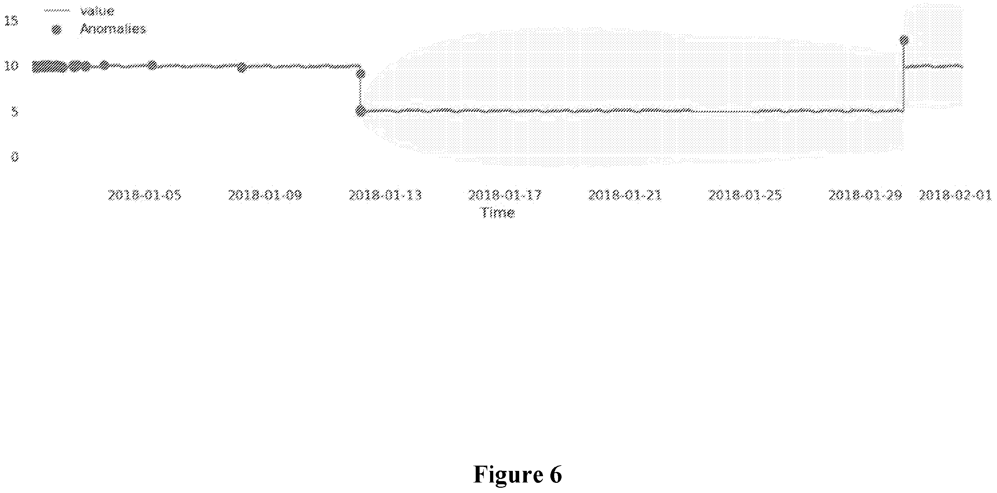

While it is clear that the online learning approach (Figure 6) requires some initial time to converge to meaningful polynomial coefficients, once this process is achieved, it detects very meaningful anomalies (e.g. it does not get confused by an abrupt change in the data), and it eliminates false-positives related to data-drift. Consequently, the proposed online polynomial version can overcome the aforementioned LCM challenges and needs significantly less efforts/costs to maintain. It should be noted that the initial anomalies are due the model initial learning/convergence, and hence are ignored.

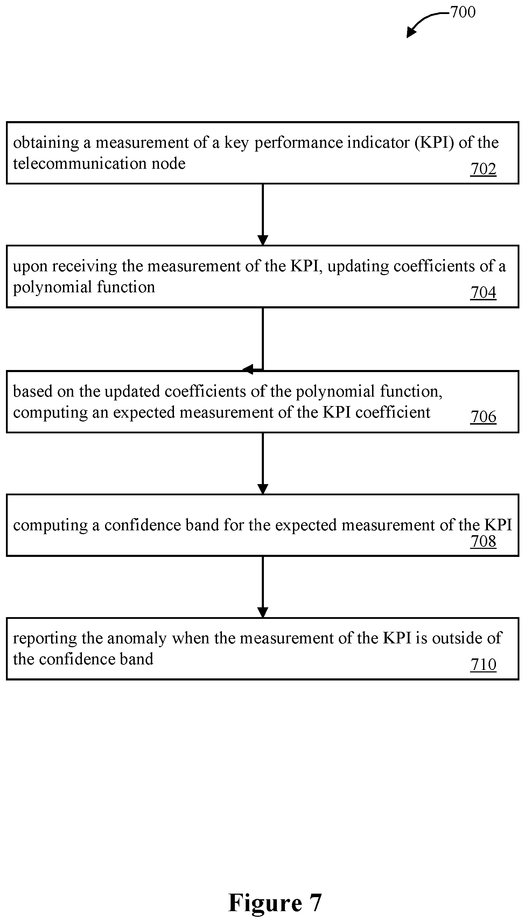

Figure 7 is a flowchart of a method 700 for reporting an anomaly in a telecommunications node. The method comprises obtaining, step 702, a measurement of a key performance indicator (KPI) of the telecommunication node. The method comprises, upon receiving the measurement of the KPI, updating, step 704, coefficients of a polynomial function.

The method comprises, based on the updated coefficients of the polynomial function, computing, step 706, an expected measurement of the KPI. The method comprises computing, step 708, a confidence band for the expected measurement of the KPI. The method comprises reporting, step 710, the anomaly when the measurement of the KPI is outside of the confidence band.

Initial coefficients of the polynomial function may be computed based on M initial measurements of the KPI and the coefficients *a* may be computed using: a = *polyfit(x[0:M], y[0:M], degree) where polyfit* is a function that computes the coefficients using a least square method , xis the time at which is taken the measurement of the KPI, *y* is the measurement of the KPI and *degree* is the degree of the polynomial function.

Updating the coefficients of the polynomial function may comprise, for each of the coefficients of the polynomial function computing a loss function for the measurement of the KPI, computing a gradient of the loss function, and updating the coefficient as a function of the gradient of the loss function.

Computing the confidence band may comprise computing an average and a standard deviation for the expected measurement of the KPI based on previous measurements and setting the confidence band to minus three times the standard deviation from the average to plus three times the standard deviation from the average.

The confidence band may be computed for each measurement of the KPI in the time series and may include computing the average and the standard deviation.

Computing the average and the standard deviation may be based on a predetermined number of most recent previous measurements which does not include all the previous measurements.

The polynomial function may be a $7^{th}$ order polynomial function.

Computing the loss function for the measurement of the KPI may be done using: $L(\underline{a}, x_i, y_i) = /P(x_i) - y_i|^2$ where L is the loss function, a is the coefficient of the polynomial function, $y_i$ is the data point, $P(a, x_i)$ is the expected measurement of the KPI and *i* is an index of the measurement of the KPI. Computing the gradient of the loss function may be done using: $\nabla_{aj}L(x_i) = 2 (x_i) /P(x_i) - y_i/$ where *L is* the loss function, $x_i$ is the time at which is taken the measurement of the KPI, $y_i$ is the measurement of the KPI, $P(x_i)$ is the expected measurement of the KPI and *i* is an index of the measurement of the KPI.

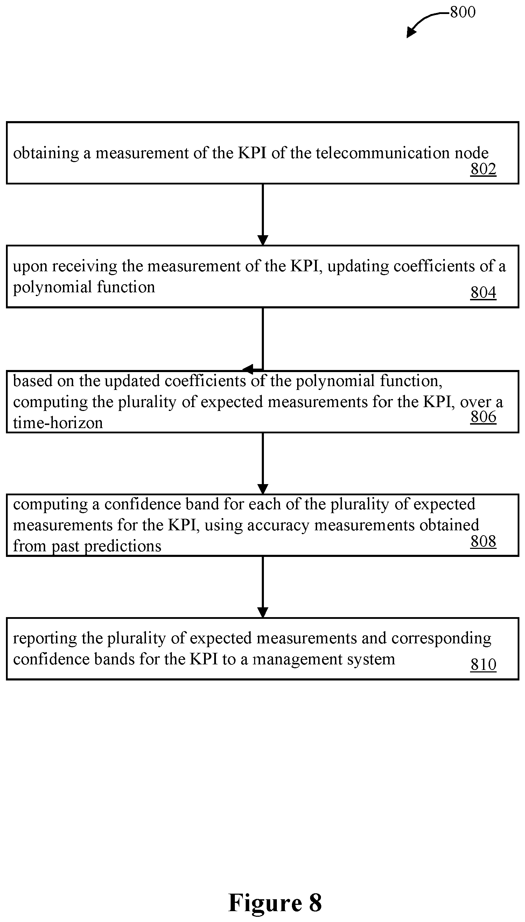

Figure 8 is a flowchart of a method 800 for forecasting a plurality of expected measurements for a key performance indicator (KPI) in a telecommunications node. The method comprises obtaining, step 802, a measurement of the KPI of the telecommunication node. The method comprises upon receiving the measurement of the KPI, updating, step 804, coefficients of a polynomial function. The method comprises based on the updated coefficients of the polynomial function, computing, step 806, the plurality of expected measurements for the KPI, over a time-horizon. The method comprises computing, step 808, a confidence band for each of the plurality of expected measurements for the KPI, using accuracy measurements obtained from past predictions. The method comprises, reporting, step 810, the plurality of expected measurements and corresponding confidence bands for the KPI to a management system.

Initial coefficients of the polynomial function may be computed based on M initial measurements of the KPI and the coefficients *a* may be computed using: a = *polyfit(x[0:M], y[0:M], degree)* where *polyfit* is a function that computes the coefficients using a least square method , *x* is the time at which is taken the measurement of the KPI, *y* is the measurement of the KPI and *degree* is the degree of the polynomial function.

Updating the coefficients of the polynomial function may comprise, for each of the coefficients of the polynomial function computing a loss function for the measurement of the KPI, computing a gradient of the loss function and updating the coefficient as a function of the gradient of the loss function.

Computing the confidence band may comprise computing an average and a standard deviation for the expected measurement of the KPI based on previous measurements and setting the confidence band to minus three times the standard deviation from the average to plus three times the standard deviation from the average.

The confidence band may be computed for each measurement of the KPI in the time series and includes computing the average and the standard deviation.

Computing the average and the standard deviation may be based on a predetermined number of most recent previous measurements which does not include all the previous measurements.

The polynomial function may be a $7^{th}$ order polynomial function.

Computing the loss function for the measurement of the KPI may be done using: $L(a, x_i, y_i) := /P(x_i) - y_i|^2$ where L is the loss function, a is the coefficient of the polynomial function, $y_i$ is the data point, $P(a, x_i)$ is the expected measurement of the KPI and *i* is an index of the measurement of the KPI.

Computing the gradient of the loss function may be done using: $\nabla_{aj}L(x_i) = 2 (x_i) /P(x_i) - y_i/$ where *L is* the loss function, $x_i$ is the time at which is taken the measurement of the KPI, $y_i$ is the measurement of the KPI, $P(x_i)$ is the expected measurement of the KPI and *i* is an index of the measurement of the KPI.

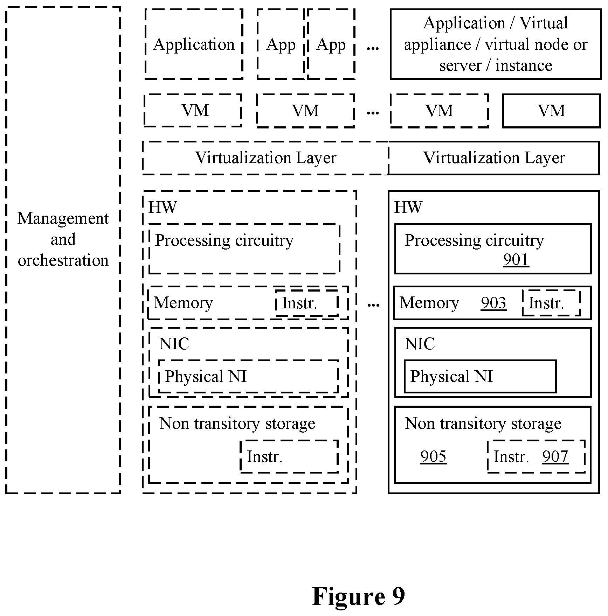

Referring to figure 9, there is provided a virtualization environment in which functions and steps described herein can be implemented.

A virtualization environment (which may go beyond what is illustrated in figure 9), may comprise systems, networks, servers, nodes, devices, etc., that are in communication with each other either through wire or wirelessly. Some or all of the functions and steps described herein may be implemented as one or more virtual components (e.g., via one or more applications, components, functions, virtual machines or containers, etc.) executing on one or more physical apparatus in one or more networks, systems, environment, etc.

A virtualization environment provides hardware comprising processing circuitry 901 and memory 903. The memory can contain instructions executable by the processing circuitry whereby functions and steps described herein may be executed to provide any of the relevant features and benefits disclosed herein.

The hardware may also include non-transitory, persistent, machine readable storage media 905 having stored therein software and/or instruction 907 executable by processing circuitry to execute functions and steps described herein.

Referring to figure 9, the apparatus (HW label in figure 9) is operative to report an anomaly in a telecommunications node. The apparatus comprises processing circuits 901 and a memory 903, the memory 903 containing instructions executable by the processing circuits 901 whereby the apparatus is operative to obtain a measurement of a key performance indicator (KPI) of the telecommunication node. The apparatus is operative to, upon receiving the measurement of the KPI, update coefficients of a polynomial function. The apparatus is operative to, based on the updated coefficients of the polynomial function, compute an expected measurement of the KPI. The apparatus is operative to compute a confidence band for the expected measurement of the KPI. The apparatus is operative to report the anomaly when the measurement of the KPI is outside of the confidence band.

Still referring to figure 9, the apparatus (HW label in figure 9) is operative to forecast a plurality of expected measurements for a key performance indicator (KPI) in a telecommunications node. The apparatus comprises processing circuits 901 and a memory 903, the memory 903 containing instructions executable by the processing circuits 901 whereby the apparatus is operative to obtain a measurement of the KPI of the telecommunication node. The apparatus is operative to, upon receiving the measurement of the KPI, update coefficients of a polynomial function. The apparatus is operative to, based on the updated coefficients of the polynomial function, compute the plurality of expected measurements for the KPI, over a time-horizon. The apparatus is operative to compute a confidence band for each of the plurality of expected measurements for the KPI, using accuracy measurements obtained from past predictions. The apparatus is operative to report the plurality of expected measurements and corresponding confidence bands for the KPI to a management system. Both apparatuses are further operative to execute any of the steps described herein.

Referring to figure 9, the non-transitory computer readable media 905 has stored thereon instructions for reporting an anomaly in a telecommunications node, the instructions comprising any of the steps described herein.

Referring to figure 9, the non-transitory computer readable media 905 has stored thereon instructions for forecasting a plurality of expected measurements for a key performance indicator (KPI) in a telecommunications node, the instructions comprising any of the steps described herein.

## Claims

1. A method (700) for reporting an anomaly in a telecommunications node, comprising:

   - obtaining (702) a measurement of a key performance indicator, KPI, of the telecommunication node;
   - upon receiving the measurement of the KPI, updating (704) coefficients of a polynomial function, comprising, for each of the coefficients of the polynomial function:

      ○ computing a loss function for the measurement of the KPI;
      ○ computing a gradient of the loss function; and
      ○ updating the coefficient as a function of the gradient of the loss function;

   - based on the updated coefficients of the polynomial function, computing (706) an expected measurement of the KPI;
   - computing (708) a confidence band for the expected measurement of the KPI; and
   - reporting (710) the anomaly when the measurement of the KPI is outside of the confidence band.

2. A method (800) for forecasting a plurality of expected measurements for a key performance indicator, KPI, in a telecommunications node, comprising:

   - obtaining (802) a measurement of the KPI of the telecommunication node;
   - upon receiving the measurement of the KPI, updating (804) coefficients of a polynomial function, comprising, for each of the coefficients of the polynomial function:

      ○ computing a loss function for the measurement of the KPI;
      ○ computing a gradient of the loss function; and

∘ updating the coefficient as a function of the gradient of the loss function;

- based on the updated coefficients of the polynomial function, computing (806) the plurality of expected measurements for the KPI, over a time-horizon;
- computing (808) a confidence band for each of the plurality of expected measurements for the KPI, using accuracy measurements obtained from past predictions; and
- reporting (810) the plurality of expected measurements and corresponding confidence bands for the KPI to a management system.

3. The method of claim 1 or 2, wherein initial coefficients of the polynomial function are computed based on $M$ initial measurements of the KPI and the coefficients a are computed using: $a = polyfit(x[0:M], y[0:M], degree)$ where *polyfit* is a function that computes the coefficients using a least square method, $x$ is the time at which is taken the measurement of the KPI, $y$ is the measurement of the KPI and *degree* is the degree of the polynomial function.

4. The method of claim 1 or 2, wherein computing the confidence band comprises:

- computing an average and a standard deviation for the expected measurement of the KPI based on previous measurements; and
- setting the confidence band to minus three times the standard deviation from the average to plus three times the standard deviation from the average.

5. The method of claim 4, wherein:

- the confidence band is computed for each measurement of the KPI in a time series and includes computing the average and the standard deviation; or
- computing the average and the standard deviation is based on a predetermined number of most recent previous measurements which does not include all the previous measurements.

6. The method of claim 1 or 2, wherein the polynomial function is a $7^{th}$ order polynomial function.

7. The method of claim 1 or 2, wherein

- computing the loss function for the measurement of the KPI is done using: $L(a, x_i, y_i) = /P(x_i) - y_i/^2$, where $L$ *is* the loss function, a is the coefficient of the polynomial function, $y_i$ is the data point, $P(a, x_i)$ is the expected measurement of the KPI and $i$ is an index of the measurement of the KPI; or
- computing the gradient of the loss function is done using: $\nabla_{aj}L(x_i) = 2 (x_i) /P(x_i) - y_i/$, where $L$ *is* the loss function, $x_i$ is the time at which is taken the measurement of the KPI, $y_i$ is the measurement of the KPI, $P(x_i)$ is the expected measurement of the KPI and $i$ is an index of the measurement of the KPI.

8. An apparatus operative to report an anomaly in a telecommunications node comprising processing circuits and a memory, the memory containing instructions executable by the processing circuits whereby the apparatus is operative to:

- obtain a measurement of a key performance indicator, KPI, of the telecommunication node;
- upon receiving the measurement of the KPI, update coefficients of a polynomial function, comprising, for each of the coefficients of the polynomial function:

∘ computing a loss function for the measurement of the KPI;
∘ computing a gradient of the loss function; and
∘ updating the coefficient as a function of the gradient of the loss function;

- based on the updated coefficients of the polynomial function, compute an expected measurement of the KPI;
- compute a confidence band for the expected measurement of the KPI; and
- report the anomaly when the measurement of the KPI is outside of the confidence band.

9. An apparatus operative to forecast a plurality of expected measurements for a key performance indicator, KPI, in a telecommunications node comprising processing circuits and a memory, the memory containing instructions executable by the processing circuits whereby the apparatus is operative to:

- obtain a measurement of the KPI of the telecommunication node;
- upon receiving the measurement of the KPI, update coefficients of a polynomial function, comprising, for each of the coefficients of the polynomial function:

  ○ computing a loss function for the measurement of the KPI;
  ○ computing a gradient of the loss function; and
  ○ updating the coefficient as a function of the gradient of the loss function;

- based on the updated coefficients of the polynomial function, compute the plurality of expected measurements for the KPI, over a time-horizon;
- compute a confidence band for each of the plurality of expected measurements for the KPI, using accuracy measurements obtained from past predictions; and
- report the plurality of expected measurements and corresponding confidence bands for the KPI to a management system.

10. The apparatus of claim 8 or 9, wherein initial coefficients of the polynomial function are computed based on $M$ initial measurements of the KPI and the coefficients a are computed using: $a = polyfit(x[0:M], y[0:M], degree)$ where *polyfit* is a function that computes the coefficients using a least square method, $x$ is the time at which is taken the measurement of the KPI, $y$ is the measurement of the KPI and *degree* is the degree of the polynomial function.

11. The apparatus of claim 8 or 9, wherein computing the confidence band comprises:

- computing an average and a standard deviation for the expected measurement of the KPI based on previous measurements; and
- setting the confidence band to minus three times the standard deviation from the average to plus three times the standard deviation from the average.

12. The apparatus of claim 11, wherein:

- the confidence band is computed for each measurement of the KPI in a time series and includes computing the average and the standard deviation; or
- computing the average and the standard deviation is based on a predetermined number of most recent previous measurements which does not include all the previous measurements.

13. The apparatus of claim 8 or 9, wherein the polynomial function is a $7^{th}$ order polynomial function.

14. The apparatus of claim 8 or 9, wherein:

- computing the loss function for the measurement of the KPI is done using: $L(a, x_i, y_i) := /P(x_i) - y_i/^2$, where $L$ *is* the loss function, a is the coefficient of the polynomial function, $y_i$ is the data point, $P(a, x_i)$ is the expected measurement of the KPI and $i$ is an index of the measurement of the KPI; or
- computing the gradient of the loss function is done using: $\nabla_{aj}L(x_i) = 2 (x_i) /P(x_i) - y_i/$, where $L$ *is* the loss function, $x_i$ is the time at which is taken the measurement of the KPI, $y_i$ is the measurement of the KPI, $P(x_i)$ is the expected measurement of the KPI and $i$ is an index of the measurement of the KPI.

15. A non-transitory computer readable medium having stored thereon instructions in a telecommunications node, the instructions comprising any of the steps of claims 1 to 7.

**Patentansprüche**

1. Verfahren (700) zum Melden einer Anomalie in einem Telekommunikationsknoten, aufweisend:

- Erhalten (702) einer Messung eines Leistungskennwerts, KPI, des Telekommunikationsknotens;
- nach Erhalt der Messung des KPI, Aktualisieren (704) von Koeffizienten einer Polynomfunktion, aufweisend für jeden der Koeffizienten der Polynomfunktion:

  ○ Berechnen einer Verlustfunktion für die Messung des KPI;

◦ Berechnen eines Gradienten der Verlustfunktion; und
◦ Aktualisieren des Koeffizienten als Funktion des Gradienten der Verlustfunktion;

- auf der Grundlage der aktualisierten Koeffizienten der Polynomfunktion, Berechnen (706) einer erwarteten Messung des KPI;
- Berechnen (708) eines Konfidenzbandes für die erwartete Messung des KPI; und
- Melden (710) der Anomalie, wenn der Messwert des KPI außerhalb des Konfidenzbandes liegt.

2. Verfahren (800) zum Prognostizieren einer Mehrzahl von erwarteten Messwerten für einen Leistungsindikator, KPI, in einem Telekommunikationsknoten, aufweisend:

- Erhalten (802) eines Messwerts des KPI des Telekommunikationsknotens;
- nach Erhalt der Messung des KPI, Aktualisieren (804) von Koeffizienten einer Polynomfunktion, aufweisend für jeden der Koeffizienten der Polynomfunktion:

◦ Berechnen einer Verlustfunktion für die Messung des KPI;
◦ Berechnen eines Gradienten der Verlustfunktion; und
◦ Aktualisieren des Koeffizienten als Funktion des Gradienten der Verlustfunktion;

- auf der Grundlage der aktualisierten Koeffizienten der Polynomfunktion, Berechnen (806) der Mehrzahl von erwarteten Messungen für den KPI über einen Zeithorizont;
- Berechnen (808) eines Konfidenzbandes für jede der Mehrzahl von erwarteten Messungen für den KPI unter Verwendung von Genauigkeitsmessungen, die aus früheren Vorhersagen gewonnen wurden; und
- Melden (810) der Mehrzahl von erwarteten Messungen und von zugehörigen Konfidenzbändern für den KPI an ein Managementsystem.

3. Verfahren nach Anspruch 1 oder 2, wobei Anfangskoeffizienten der Polynomfunktion auf der Grundlage von MAnfangsmessungen des KPI berechnet werden und die Koeffizienten a berechnet werden unter Verwendung von: a = polyfit(x[0:M], y[0:M], degree)
wobei *polyfit* eine Funktion ist, die die Koeffizienten unter Verwendung einer Methode der kleinsten Quadrate berechnet, xder Zeitpunkt ist, zu dem die Messung des KPI vorgenommen wird, *y* die Messung des KPI ist und *degree der* Grad der Polynomfunktion ist.

4. Verfahren nach Anspruch 1 oder 2, wobei das Berechnen des Konfidenzbandes beinhaltet:

- Berechnen eines Durchschnitts und einer Standardabweichung für die erwartete Messung des KPI auf der Grundlage früherer Messungen; und
- Festlegen des Konfidenzbandes auf minus dreimal die Standardabweichung bezogen auf den Durchschnitt bis plus dreimal die Standardabweichung bezogen auf den Durchschnitt.

5. Verfahren nach Anspruch 4, wobei:

- das Konfidenzband für jede Messung des KPI in einer Zeitreihe berechnet wird und die Berechnung des Durchschnitts und der Standardabweichung beinhaltet; oder
- die Berechnung des Durchschnitts und der Standardabweichung auf einer vorbestimmten Anzahl von letzten früheren Messungen basiert, die nicht alle früheren Messungen beinhaltet.

6. Verfahren nach Anspruch 1 oder 2, wobei die Polynomfunktion eine Polynomfunktion 7. Ordnung ist.

7. Verfahren nach Anspruch 1 oder 2, wobei

- die Berechnung der Verlustfunktion für die Messung des KPI erfolgt unter Verwendung von: $L(\underline{a}, x_i, y_i) = /P(x_i) - y_i|^2$, wobei L die Verlustfunktion ist, a der Koeffizient der Polynomfunktion ist, $y_i$ der Datenpunkt ist, $P(a, x_i)$ die erwartete Messung des KPI ist und *i* ein Index der Messung des KPI ist; oder
- die Berechnung des Gradienten der Verlustfunktion erfolgt unter Verwendung von: $\nabla_{aj} L(x_i) = 2(x_i) |P(x_i) - y_i|$, wobei L die Verlustfunktion ist, $x_i$ der Zeitpunkt ist, zu dem die Messung des KPI vorgenommen wird, $y_i$ die Messung des KPI ist, $P(x_i)$ die erwartete Messung des KPI ist und *i* ein Index der Messung des KPI ist.

8. Vorrichtung zum Melden einer Anomalie in einem Telekommunikationsknoten, aufweisend Verarbeitungsschaltungen und einen Speicher, wobei der Speicher von den Verarbeitungsschaltungen ausführbare Befehle beinhaltet, wodurch die Vorrichtung betriebsfähig ist zum:

- Erhalten einer Messung eines Leistungskennwerts, KPI, des Telekommunikationsknotens;
- nach Erhalt des Messwerts des KPI, Aktualisieren von Koeffizienten einer Polynomfunktion, aufweisend für jeden der Koeffizienten der Polynomfunktion:

  ◦ Berechnen einer Verlustfunktion für die Messung des KPI;
  ◦ Berechnen eines Gradienten der Verlustfunktion; und
  ◦ Aktualisieren des Koeffizienten als Funktion des Gradienten der Verlustfunktion;

- auf der Grundlage der aktualisierten Koeffizienten der Polynomfunktion, Berechnen einer erwarteten Messung des KPI;
- Berechnen eines Konfidenzbandes für die erwartete Messung des KPI; und
- Melden der Anomalie, wenn der Messwert des KPI außerhalb des Konfidenzbandes liegt.

9. Vorrichtung zum Prognostizieren einer Mehrzahl von erwarteten Messwerten für einen Leistungsindikator, KPI, in einem Telekommunikationsknoten, der Verarbeitungsschaltungen und einen Speicher aufweist, wobei der Speicher von den Verarbeitungsschaltungen ausführbare Befehle beinhaltet, wodurch die Vorrichtung betriebsfähig ist zum:

- Erhalten eines Messwerts des KPI des Telekommunikationsknotens;
- nach Erhalt des Messwerts des KPI, Aktualisieren von Koeffizienten einer Polynomfunktion, aufweisend für jeden der Koeffizienten der Polynomfunktion:

  ◦ Berechnen einer Verlustfunktion für die Messung des KPI;
  ◦ Berechnen eines Gradienten der Verlustfunktion; und
  ◦ Aktualisieren des Koeffizienten als Funktion des Gradienten der Verlustfunktion;

- auf der Grundlage der aktualisierten Koeffizienten der Polynomfunktion, Berechnen der Mehrzahl von erwarteten Messungen für den KPI über einen Zeithorizont;
- Berechnen eines Konfidenzbandes für jede der Mehrzahl von erwarteten Messungen für den KPI unter Verwendung von Genauigkeitsmessungen, die aus früheren Vorhersagen gewonnen wurden; und
- Melden der Mehrzahl von erwarteten Messungen und von zugehörigen Konfidenzbändern für den KPI an ein Managementsystem.

10. Vorrichtung nach Anspruch 8 oder 9, wobei Anfangskoeffizienten der Polynomfunktion auf der Grundlage von M Anfangsmessungen des KPI berechnet werden und die Koeffizienten a berechnet werden unter Verwendung von: $a = polyfit(x[0:M], y[0:M], degree)$

wobei *polyfit* eine Funktion ist, die die Koeffizienten unter Verwendung einer Methode der kleinsten Quadrate berechnet, x der Zeitpunkt ist, zu dem die Messung des KPI vorgenommen wird, y die Messung des KPI ist und *degree der* Grad der Polynomfunktion ist.

11. Vorrichtung nach Anspruch 8 oder 9, wobei das Berechnen des Konfidenzbandes beinhaltet:

- Berechnen eines Durchschnitts und einer Standardabweichung für die erwartete Messung des KPI auf der Grundlage früherer Messungen; und
- Festlegen des Konfidenzbandes auf minus dreimal die Standardabweichung bezogen auf den Durchschnitt bis plus dreimal die Standardabweichung bezogen auf den Durchschnitt.

12. Vorrichtung nach Anspruch 11, wobei:

- das Konfidenzband für jede Messung des KPI in einer Zeitreihe berechnet wird und die Berechnung des Durchschnitts und der Standardabweichung beinhaltet; oder
- die Berechnung des Durchschnitts und der Standardabweichung auf einer vorbestimmten Anzahl von letzten früheren Messungen basiert, die nicht alle früheren Messungen beinhaltet.

13. Vorrichtung nach Anspruch 8 oder 9, wobei die Polynomfunktion eine Polynomfunktion 7. Ordnung ist.

**14.** Vorrichtung nach Anspruch 8 oder 9, wobei:

- die Berechnung der Verlustfunktion für die Messung des KPI erfolgt unter Verwendung von: $L(a, x_i, y_i) := /P(x_i) - y_i|^2$, wobei L die Verlustfunktion ist, a der Koeffizient der Polynomfunktion ist, $y_i$ der Datenpunkt ist, $P(a, x_i)$ die erwartete Messung des KPI ist und $i$ ein Index der Messung des KPI ist; oder
- die Berechnung des Gradienten der Verlustfunktion erfolgt unter Verwendung von: $\nabla_{aj} L(x_i) = 2(x_i) |P(x_i) - y_i/$, wobei L die Verlustfunktion ist, $x_i$ der Zeitpunkt ist, zu dem die Messung des KPI vorgenommen wird, $y_i$ die Messung des KPI ist, $P(x_i)$ die erwartete Messung des KPI ist und $i$ ein Index der Messung des KPI ist.

**15.** Nicht flüchtiges, computerlesbares Medium, auf dem Anweisungen in einem Telekommunikationsknoten gespeichert sind, wobei die Anweisungen einen der Schritte der Ansprüche 1 bis 7 beinhalten.

**Revendications**

**1.** Procédé (700) pour signaler une anomalie dans un nœud de télécommunications, comprenant :

- obtenir (702) une mesure d'un indicateur de performance clé, KPI, du nœud de télécommunication ;
- à la réception de la mesure du KPI, mettre à jour (704) des coefficients d'une fonction polynomiale, comprenant, pour chacun des coefficients de la fonction polynomiale :

  ◦ calculer une fonction de perte pour la mesure du KPI ;
  ◦ calculer un gradient de la fonction de perte ; et
  ◦ mettre à jour le coefficient en fonction du gradient de la fonction de perte ;

- sur la base des coefficients mis à jour de la fonction polynomiale, calculer (706) une mesure attendue du KPI ;
- calculer (708) une bande de confiance pour la mesure attendue du KPI ; et
- signaler (710) l'anomalie lorsque la mesure du KPI se situe en dehors de la bande de confiance.

**2.** Procédé (800) pour prévoir une pluralité de mesures attendues pour un indicateur de performance clé, KPI, dans un nœud de télécommunications, comprenant :

- obtenir (802) une mesure du KPI du nœud de télécommunication ;
- à la réception de la mesure du KPI, mettre à jour (804) des coefficients d'une fonction polynomiale, comprenant, pour chacun des coefficients de la fonction polynomiale :

  ◦ calculer une fonction de perte pour la mesure du KPI ;
  ◦ calculer un gradient de la fonction de perte ; et
  ◦ mettre à jour le coefficient en fonction du gradient de la fonction de perte ;

- sur la base des coefficients mis à jour de la fonction polynomiale, calculer (806) la pluralité de mesures attendues pour le KPI, sur un horizon temporel ;
- calculer (808) une bande de confiance pour chacune de la pluralité de mesures attendues pour le KPI, en utilisant des mesures de précision obtenues à partir de prédictions passées ; et
- communiquer (810) la pluralité de mesures attendues et des bandes de confiance correspondantes pour le KPI à un système de gestion.

**3.** Procédé selon la revendication 1 ou 2, dans lequel des coefficients initiaux de la fonction polynomiale sont calculés sur la base de M mesures initiales du KPI et les coefficients a sont calculés à l'aide de : a = polyfit(x[0:M], y[0:M], degré) où *polyfit est* une fonction qui calcule les coefficients à l'aide d'une méthode des moindres carrés, *x* est le moment auquel la mesure du KPI est prise, y est la mesure du KPI et *degree* est le degré de la fonction polynomiale.

**4.** Procédé selon la revendication 1 ou 2, dans lequel le calcul de la bande de confiance comprend :

- calculer une moyenne et un écart type pour la mesure attendue du KPI sur la base des mesures précédentes ; et
- définir la bande de confiance entre moins trois fois l'écart type par rapport à la moyenne et plus trois fois l'écart type par rapport à la moyenne.

5. Procédé selon la revendication 4, dans lequel :

- la bande de confiance est calculée pour chaque mesure du KPI dans une série chronologique et comprend le calcul de la moyenne et de l'écart type ; ou
- le calcul de la moyenne et de l'écart type est basé sur un nombre prédéterminé de mesures précédentes les plus récentes qui n'inclut pas toutes les mesures précédentes.

6. Procédé selon la revendication 1 ou 2, dans lequel la fonction polynomiale est une fonction polynomiale du $7^e$ ordre.

7. Procédé selon la revendication 1 ou 2, dans lequel

- le calcul de la fonction de perte pour la mesure du KPI s'effectue à l'aide de :
$L(\underline{a}, x_i, y_i) = |P(x_i) - y_i/^2$, où $L$ est la fonction de perte, $a$ est le coefficient de la fonction polynomiale, $y_i$ est le point de données, $P(a, x_i)$ est la mesure attendue du KPI et $i$ est un indice de la mesure du KPI ; ou
- le calcul du gradient de la fonction de perte est effectué à l'aide de : $\nabla_{aj} L(x_i) = 2(x_i) |P(x_i) - y_i /$, où $L$ est la fonction de perte, $x_i$ est le moment auquel la mesure du KPI est prise, $y_i$ est la mesure du KPI, $P(x_i)$ est la mesure attendue du KPI et $i$ est un indice de la mesure du KPI.

8. Appareil permettant de signaler une anomalie dans un nœud de télécommunications, comprenant des circuits de traitement et une mémoire, la mémoire contenant des instructions exécutables par les circuits de traitement, grâce auxquelles l'appareil est opérable pour :

- obtenir une mesure d'un indicateur de performance clé, KPI, du nœud de télécommunication ;
- à la réception de la mesure du KPI, mettre à jour des coefficients d'une fonction polynomiale, comprenant, pour chacun des coefficients de la fonction polynomiale :

  ◦ calculer une fonction de perte pour la mesure du KPI ;
  ◦ calculer un gradient de la fonction de perte ; et
  ◦ mettre à jour le coefficient en fonction du gradient de la fonction de perte ;

- sur la base des coefficients mis à jour de la fonction polynomiale, calculer une mesure attendue du KPI ;
- calculer une bande de confiance pour la mesure attendue du KPI ; et
- signaler l'anomalie lorsque la mesure du KPI se situe en dehors de la bande de confiance.

9. Appareil permettant de prévoir une pluralité de mesures attendues pour un indicateur de performance clé, KPI, dans un nœud de télécommunications, comprenant des circuits de traitement et une mémoire, la mémoire contenant des instructions exécutables par les circuits de traitement, grâce auxquelles l'appareil est opérable pour :

- obtenir une mesure du KPI du nœud de télécommunication ;
- à la réception de la mesure du KPI, mettre à jour des coefficients d'une fonction polynomiale, comprenant, pour chacun des coefficients de la fonction polynomiale :

  ◦ calculer une fonction de perte pour la mesure du KPI ;
  ◦ calculer un gradient de la fonction de perte ; et
  ◦ mettre à jour le coefficient en fonction du gradient de la fonction de perte ;

- sur la base des coefficients mis à jour de la fonction polynomiale, calculer la pluralité de mesures attendues pour le KPI, sur un horizon temporel ;
- calculer une bande de confiance pour chacune de la pluralité de mesures attendues pour le KPI, en utilisant des mesures de précision obtenues à partir de prédictions passées ; et
- communiquer la pluralité de mesures attendues et des bandes de confiance correspondantes pour le KPI à un système de gestion.

10. Appareil selon la revendication 8 ou 9, dans lequel des coefficients initiaux de la fonction polynomiale sont calculés sur la base de M mesures initiales du KPI et les coefficients a sont calculés à l'aide de : $a = polyfit(x[0:M], y[0:M], degré)$ où *polyfit est* une fonction qui calcule les coefficients à l'aide d'une méthode des moindres carrés, $x$ est le moment auquel la mesure du KPI est prise, y est la mesure du KPI et *degree* est le degré de la fonction polynomiale.

11. Appareil selon la revendication 8 ou 9, dans lequel le calcul de la bande de confiance comprend :

- calculer une moyenne et un écart type pour la mesure attendue du KPI sur la base des mesures précédentes ; et
- définir la bande de confiance entre moins trois fois l'écart type par rapport à la moyenne et plus trois fois l'écart type par rapport à la moyenne.

12. Appareil selon la revendication 11, dans lequel :

- la bande de confiance est calculée pour chaque mesure du KPI dans une série chronologique et comprend le calcul de la moyenne et de l'écart type ; ou
- le calcul de la moyenne et de l'écart type est basé sur un nombre prédéterminé de mesures précédentes les plus récentes qui n'inclut pas toutes les mesures précédentes.

13. Appareil selon la revendication 8 ou 9, dans lequel la fonction polynomiale est une fonction polynomiale du $7^e$ ordre.

14. Appareil selon la revendication 8 ou 9, dans lequel :

- le calcul de la fonction de perte pour la mesure du KPI est effectué à l'aide de : $L(a, x_i, y_i) := |P(x_i) - y_i/^2$, où L est la fonction de perte, a est le coefficient de la fonction polynomiale, $y_i$ est le point de données, $P(a, x_i)$ est la mesure attendue du KPI et $i$ est un indice de la mesure du KPI ; ou
- le calcul du gradient de la fonction de perte est effectué à l'aide de : $\nabla_{aj} L(x_i) = 2(x_i) |P(x_i) - y_i/$, où L est la fonction de perte, $x_i$ est le moment où la mesure du KPI est prise, $y_i$ est la mesure du KPI, $P(x_i)$ est la mesure attendue du KPI et $i$ est un indice de la mesure du KPI.

15. Support informatique non transitoire sur lequel sont stockées des instructions dans un nœud de télécommunications, les instructions comprenant l'une quelconque des étapes des revendications 1 à 7.

**Figure 1**

EP 4 305 822 B1

**Figure 2**

**Figure 3**

**Figure 4**

EP 4 305 822 B1

Figure 5

**Figure 6**

EP 4 305 822 B1

700

obtaining a measurement of a key performance indicator (KPI) of the telecommunication node                                                      702

upon receiving the measurement of the KPI, updating coefficients of a polynomial function                                                      704

based on the updated coefficients of the polynomial function, computing an expected measurement of the KPI coefficient          706

computing a confidence band for the expected measurement of the KPI                                                                                   708

reporting the anomaly when the measurement of the KPI is outside of the confidence band                                                           710

**Figure 7**

—800

obtaining a measurement of the KPI of the telecommunication node
802

upon receiving the measurement of the KPI, updating coefficients of a polynomial function
804

based on the updated coefficients of the polynomial function, computing the plurality of expected measurements for the KPI, over a time-horizon
806

computing a confidence band for each of the plurality of expected measurements for the KPI, using accuracy measurements obtained from past predictions
808

reporting the plurality of expected measurements and corresponding confidence bands for the KPI to a management system
810

**Figure 8**

Figure 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210051503 A1